(19) Europäisches Patentamt / European Patent Office / Office européen des brevets

(11) **EP 3 645 630 B1**

(12) **EUROPEAN PATENT SPECIFICATION**

(45) Date of publication and mention
of the grant of the patent:
**22.04.2026  Bulletin 2026/17**

(21) Application number: **18749127.9**

(22) Date of filing: **26.06.2018**

(51) International Patent Classification (IPC):
**C08K 3/04** *(2006.01)*    **C08K 5/315** *(2006.01)*
**C08K 5/41** *(2006.01)*    **C08L 63/00** *(2006.01)*
**C08J 5/24** *(2006.01)*    **B32B 5/02** *(2006.01)*
**B32B 38/08** *(2006.01)*

(52) Cooperative Patent Classification (CPC):
(C-Sets available)
**C08K 3/041; B32B 5/02; B32B 38/08; C08J 5/243;
C08J 5/249; C08K 5/3155; C08K 5/41; C08L 63/00;**
C08K 2201/003; C08K 2201/011; C08K 2201/016
(Cont.)

(86) International application number:
**PCT/IB2018/054686**

(87) International publication number:
**WO 2019/003095 (03.01.2019 Gazette 2019/01)**

(54) **PROCESS FOR PREPARING SUSPENSIONS OF CARBON NANOTUBES IN POLYMERS, SUSPENSIONS THUS OBTAINED, AND THEIR USE IN PRODUCTION OF COMPOSITES**

VERFAHREN ZUR HERSTELLUNG VON SUSPENSIONEN AUS KOHLENSTOFFNANORÖHREN IN POLYMEREN, SO ERHALTENE SUSPENSIONEN UND IHRE VERWENDUNG ZUR HERSTELLUNG VON VERBUNDWERKSTOFFEN

PROCÉDÉ DE PRÉPARATION DE SUSPENSIONS DE NANOTUBES DE CARBONE DANS DES POLYMÈRES, SUSPENSIONS AINSI OBTENUES, ET LEUR UTILISATION DANS LA PRODUCTION DE COMPOSITES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2017  PCT/IB2017/053795**

(43) Date of publication of application:
**06.05.2020  Bulletin 2020/19**

(73) Proprietor: **Nano-Tech S.P.A.**
**63100 Ascoli Piceno (IT)**

(72) Inventors:
• **GIOVANNELLI, Andrea**
**60121 Ancona (IT)**
• **GIOVANNELLI, Donato**
**71012 Rodi Garganico (IT)**
• **BARCALA DOMINGUEZ, Patricia**
**60121 Ancona (IT)**

(74) Representative: **Palladino, Saverio Massimo et al**
**Notarbartolo & Gervasi S.p.A.**
**Viale Achille Papa, 30**
**20149 Milano (IT)**

(56) References cited:
**EP-A1- 2 228 406      WO-A2-2006/026691
WO-A2-2009/101498    US-A1- 2006 166 003**

(52) Cooperative Patent Classification (CPC): (Cont.)

C-Sets
**C08K 3/041, C08L 35/02;
C08K 3/041, C08L 61/04;
C08K 3/041, C08L 63/00;
C08K 3/041, C08L 79/00;**
**C08K 3/041, C08L 83/00;
C08K 5/41, C08L 35/02;
C08K 5/41, C08L 61/04;
C08K 5/41, C08L 63/00;
C08K 5/41, C08L 79/00;
C08K 5/41, C08L 83/00**

**Description**

## FIELD OF THE INVENTION

The present invention relates to a process for preparing suspensions of carbon nanotubes in polymers, to the suspensions obtained by this process, and to their use in the production of composite materials, pre-pregs and coatings.

## STATE OF THE ART

It is known that polymers can be loaded with a wide variety of both organic and inorganic materials, such as fibers, powders, or other forms of particulate matter, in order to modify their properties.

This method is used to improve the properties of polymers from a mechanical, chemical or physical point of view, or to give the polymers better properties or special features.

Applications of the method are numerous.

Just to list some examples, it is known to add minerals such as talc, mica or kaolin, in finely divided form, to thermoplastic materials, in order to increase their resistance to bending and impact. The composite materials thus obtained are used, for example, in the automotive industry. It is known to add copper salts in combination with potassium bromide or iodide to polyamides so as to increase their resistance to high temperature oxidation and thus to prevent the degradation of their mechanical properties over time. Other additives widely used in the field are flame retardants, among which the most common are brominated organic compounds, phosphorus containing compounds, antimony oxide and others. Finally, it is known to add graphite or coal powder to polymers of any kind to give them electrical conduction properties.

After the discovery of so-called "carbon nanotubes" in 1991, the addition of these new materials to polymers has also been extensively explored. Carbon nanotubes are generally referred to as CNTs (from the english definition Carbon NanoTubes). These materials exist in single wall form, known as SWCNTs (Single-Wall CNTs), and consisting of a single layer of carbon atoms that defines a cylindrical wall; and in multiple wall forms, known as MWCNTs (Multi-Wall CNTs) and consist of two or more of said cylindrical walls in a concentric arrangement. Another important feature to describe the CNTs is their "aspect ratio", that is the ratio between the largest and the smaller dimension; in this case, this is the ratio between the length and the diameter.

Many patents relate to polymer materials loaded with CNTs; in most of these patents, SWCNTs are used because they are the ones having most controlled features and give the best results.

U.S. Patent 7,479,516 B2 describes, in principle, the addition of SWCNTs to virtually any type of polymers and for any possible application; however, this patent indicates that to have an efficient (and useful for the intended purposes) interaction between polymers and CNTs, it is necessary to functionalize the surface thereof through the use of oligomers, i.e. short polymer type chains, before adding CNTs to the polymer.

US patent application 2012/0123020 A1 describes the addition of CNTs (in particular MWCNTs) to epoxy resins; also according to this document, however, in order to have a good interaction between the polymer and the CNTs, it is necessary to have them previously functionalized, in this case by an ozonolysis treatment.

US patent application 2010/0143701 A1 describes various uses of epoxy resins loaded with CNTs, for example for impregnating fabrics to obtain articles known as "pre-preg" in the art; notwithstanding the description is in general terms, only executions with SWCNTs are exemplified. However, also this document states that in order to have a good interaction between CNTs and the polymer, and thus to obtain the desired functional enhancements, it is necessary to have the CNTs functionalized before their addition to the polymer, in this case through the formation of functional groups on the surface of the CNTs (in particular acyl halides), capable of reacting with the polymer matrix.

Patent applications US 2008/0300357 A1 (concerning the use of dual wall CNTs and MWCNTs) and US 2009/0035570 A1 (concerning the use of SWCNTs, dual wall CNTs and MWCNTs) describe loading CNTs in epoxy resins by predispersion of the CNTs in acetone, and adding the suspension thus obtained to the polymer; then, the resulting mixture undergoes an ultrasonic treatment. The process involves the addition of the cross-linking agent prior to the evaporation process of the acetone, which lasts 48 hrs at 70 °C at reduced pressure. This process inhibits the use of most cross-linkers because the polymer would cross-link during this operation. As a consequence, only resins that cross-link at high temperatures can be obtained, which are suitable only for certain applications. Avoiding the degassing step (so leaving acetone in solution) would instead lead to the production of a porous cross-linked polymer.

Patent application WO 2006/026691 A2 describes a method for loading resins of various chemical composition with CNTs; the method described in this document is similar to the methods described in the previous documents using a solvent, and requires CNTs to be dispersed by simple extrusion into a first fluid polymeric precursor, for example, an epoxide, with a controlled viscosity ranging from 15 to 600 poise, (possibly with the help of solvents added to the precursor), and mixing of this first precursor with a second polymer precursor, obtaining therefore a mixture of precursors, which will then be cross-linked to obtain the final thermoset polymer; with regard to the two-step procedure, see, for example, paragraphs [0048]-[0053] or [0083], which are related to the dispersion of CNTs into the first polymeric precursor, and paragraphs [0054] or [0091], which relate to mixing the intermediate conductive precursor with a second polymeric precursor. Actually, the procedure described in this document is similar to that for "in-solvent" methods, the difference being that the phase in which the CNTs are initially dispersed is also a fluid polymeric material.

Patent application WO 2009/101498 A2 describes the production of composites with polymer matrices loaded with CNTs and hollow glass microspheres, to decrease the density of the composite. The distribution of CNTs and microspheres in the polymeric matrix is described in very general therms; for example, the text says that this mixing can be done manually, by "shear homogenisation", or by ultrasound, but nothing is said therein about the dispersal efficiency of these methods; the examples however indicate that to obtain electrically conductive composites, where the CNTs are sufficiently dispersed to form a percolation path for the current, loadings of at least 10% by weight are required, , while to have a similar effect with lower loads, the use of functionalized CNTs, for example, terminated with amine groups, is necessary.

Patent application WO 2010/007163 A1 describes a procedure for the preparation of fibre composites (e.g. carbon, glass or aramid) impregnated with a polymer loaded with CNTs. This document describes a two-step procedure: in the first step, the fibres are covered with a low-viscosity material (for example, a suspension of a phenoxide based binder in water) in which CNTs are dispersed, and in the second step the coated fibres are impregnated by the polymer precursor. According to this document, after the contact between the CNTs suspension and the pre-polymer, and prior to hardening of this latter, a migration of the CNTs occurs to the pre-polymer, so that at the end of the procedure the hardened polymer is loaded with CNTs.

From these documents one can deduce the knowledge that, to achieve an improvement in the functional properties of the composite material through the addition of CNTs, their functionalisation is almost always necessary, i.e. a chemical modification of the materials before their mixing with the polymer; alternatively (or in addition), viscosity of the polymer precursor or prior dispersion of the CNTs in a solvent is required, obtaining therefore a suspension to be added to the polymer during its formation, which means, however, that the solvent must be removed before the polymerization is completed.

Moreover, the compositions of the known technique often require relatively large amounts of CNTs, e.g., in the order of 5-10% by weight to achieve the desired effects.

Another limitation of the compositions of the known technique is that for their preparation (in view of obtaining improved functional properties) they often require the use of single-walled carbon nanotubes only, which, however, are more difficult to produce and/or to purify, and therefore are more expensive than multiple-walled nanotubes.

Finally, in all methods of the known technique, suspensions or fluid dispersions of CNTs in a liquid matrix are produced immediately prior to their use, which always requires hardening (chemically with catalysts or thermally) of a pre-polymer in order to give the desired final polymer; preparation and use of CNTs suspensions in a fluid polymeric precursor that remain stable over long periods of time are not known in the art.

The object of the present invention is to provide a process for preparing suspensions of carbon nanotubes in polymers, which are stable over time, as well as the suspensions obtained through this process, which overcome the disadvantages of the methods of the known technique, and give rise to functional performances equal to the single-walled carbon nanotubes.

## SUMMARY OF THE INVENTION

This object is achieved by the present invention, which in a first aspect relates to a process as defined in claim 1 for the production of a suspension that is fluid, homogeneous and stable more than 300 days, consisting of a polymeric matrix in which multiple-walled carbon nanotubes (MWCNTs) are dispersed.

Preferred embodiments of the process of the invention are defined in claims 2 to 5.

In a second aspect, the invention concerns a fluid suspension as defined in claim 6; a preferred fluid suspension according to the invention is defined in claim 7.

Another aspect of the invention, is a composite material obtained by hardening (chemically or thermally) the fluid suspension described above alone, for the production of coatings, adhesives or varnishes, or as a fibre-impregnating phase.

In one embodiment of the invention, said fluid suspension is used for impregnation of technical yarns, such as carbon fibers, glass fibers, basalt, kevlar or mixed fibers, by using known techniques, such as manual impregnation, infusion, Resin Transfer Molding (RTM) and pre-preg. These yarns, as in the prior art, may be in the form of unidirectional ribbons, woven fabrics, multi-axial fabrics, non-woven fabrics and the like.

## BRIEF DESCRIPTION OF THE FIGURES

Fig. 1 shows a photomicrograph under the scanning electron microscope of a hardened composite material of the invention containing MWCNTs with aspect ratio between 100 and 700;

Fig. 2 shows a photomicrograph under the scanning electron microscope of a hardened composite material of the invention containing MWCNTs with aspect ratio greater than 1000;

Fig. 3 shows the results of electrical conductivity tests performed on samples of hardened composite materials of the invention containing MWCNTs with an aspect ratio between 100 and 700;

Figs. 4a and 4b show stability results over time of a sample of a fluid suspension according to the invention, containing 0.1% by weight of MWCNTs in a polymer; measurements were carried out using Dinamic Light Scattering (DLS) technique.

Figs. 5a and 5b are similar to Figs. 4a and 4b, but they were obtained with a sample of a fluid suspension according to the invention containing 0.2% by weight of MWCNTs in a polymer;

Fig. 6 is a graph showing the sound pressure damping over time produced by a plate coated with a suspension of the invention compared to an equal graph for a non-coated plate.

## DETAILED DESCRIPTION OF THE INVENTION

The invention is described below in detail with reference to the Figures.

In the rest of the description, unless otherwise specified, the amount of MWCNTs present in the composite materials of the invention will be indicated in terms of parts by weight per 100 parts by weight of a polymer component, where by polymer component both starting monomers or oligomers and polymers, in addition to any organic type additives, in particular initiators of polymerization reactions, are meant. Terms are also used hereinbelow with the following meanings:

-  "fluid polymer.": the polymer, oligomer, or the mixture of polymers and/or oligomers in which the MWCNTs are dispersed in step d) of the invention;
-  "fluid suspension": the composition obtained after step d) of the invention process, that is, after mechanical dispersion under high shear stress of the MWCNTs in the polymer;
-  "dispersed": the term in the text refers to MWCNTs within the polymeric matrix (either fluid or already hardened after cross-linking), and indicates that MWCNTs are present in the matrix essentially completely separated from each other, without aggregation of nanotubes; likewise, "disperse" and "dispersion" mean the event occurring during step d) of the invention process, as a result of which the nanotubes, which after their production are in an aggregate form, are separated into individual nanotubes;

-  "hardened polymer": the polymer, oligomer or the mixture of polymers and/or oligomers after cross-linking by reaction between adjacent chains;
-  "composite": a material consisting of a hardened polymer within which MWCNTs are dispersed, alone or added to one or more other materials in the form of fibres.

In a first aspect, the invention consists of a process for producing a fluid suspension consisting of a polymeric matrix in which MWCNTs are dispersed.

The first step of the process, a), provides obtaining the polymer material that forms the fluid matrix of the suspension. This material is generally made up of polymeric chains that are not excessively long, in order not to have an excessive viscosity; oligopolymers, for example, may be used. The polymeric materials that can be used in the invention are epoxy resins, phenolic resins, bismaleimide resins, silicone resins and vinyl esters and mixtures thereof; epoxy resins are preferred.

Polymers useful in the invention can be produced as a preliminary step of the process from their relative monomers, but more commonly they are purchased because of their wide commercial availability. Commonly, epoxies formulations (precursors of epoxy resins) that are commercialy available, include epoxies already reacted with epichlorhydrin; formulations of this type are available, by way of example, from the company ELANTAS Camattini S.p.A. of Collecchio (PR), or by companies of the Huntsman Corporation LLC group.

The preparation of these resins is well known to polymer experts. For example, in the preferred case of epoxy resin preparation, the starting components of the precursor are typically bisphenol A and/or bisphenol F, which are reacted with epichlorhydrin or 1,6-hexanediol-diglycidylether to obtain oligomeric chains terminated with epoxy rings; these chains can be subsequently let react in homopolymerization conditions by adding reaction initiators that can be Lewis acids or bases, but most commonly are reacted with catalysts, mainly amines, organic acids or anhydrides. Depending on the number of functional groups present in the single monomer molecule or the initial reagent compound, there are different degrees of cross-linking that determine the mechanical properties of the final resin.

The second step of the process, b), includes providing MWCNT type nanotubes with a diameter between 3 and 30 nm and with aspect ratio values in two different ranges, as further specified below.

Carbon nanotubes present in the compositions of the invention are multi-walled, the type of CNTs that is most readily obtained in the production of these materials. In the compositions of the invention, the MWCNTs have a homogeneous distribution, which results in remarkable results, particularly in terms of significant improvement of the mechanical properties as compared to the corresponding unloaded resins, already with very low loading rates with MWCNT nanotubes and in any case with results comparable to those obtainable with the use of SWCNTs.

Multi-walled nanotubes useful for the invention are commercially available from various sources, for example Raymor Industries Inc., La Vérendrye (Québec, Canada); Nanocyl S.A., Sambreville (Belgium); Nanostructured & Amorphous Materials, Inc., Houston (Texas, USA);and Cnano Technology Ltd., San Francisco (California, USA).

These companies provide various types of CNTs as standard product in the catalogue, including MWCNTs characterized by purity (expressed as a percentage by weight of nanotubes on the total mixture, which also contains amorphous carbon and part of the catalysts used for their production) and average values of length and diameter.

In this step, MWCNTs are used in amounts of between 0.05 and 1 part by weight per 100 parts by weight of polymeric material when they have an aspect ratio of between 100 and 700, or are used in quantities of between 0.5 and 7 parts by weight for 100 parts by weight of polymeric material when their aspect ratio is greater than 1000.

Both in the case of MWCNTs with aspect ratios of less than 700 and in case of those with aspect ratio greater than 1000, these have external diameters between 3 and 30 nm.

In the third step of the process, c), MWCNTs are added to the fluid polymer of the suspension in the quantities by weight as above, which depend on their aspect ratio. According to the invention, MWCNTs are added to said fluid polymer without the aid of solvents.

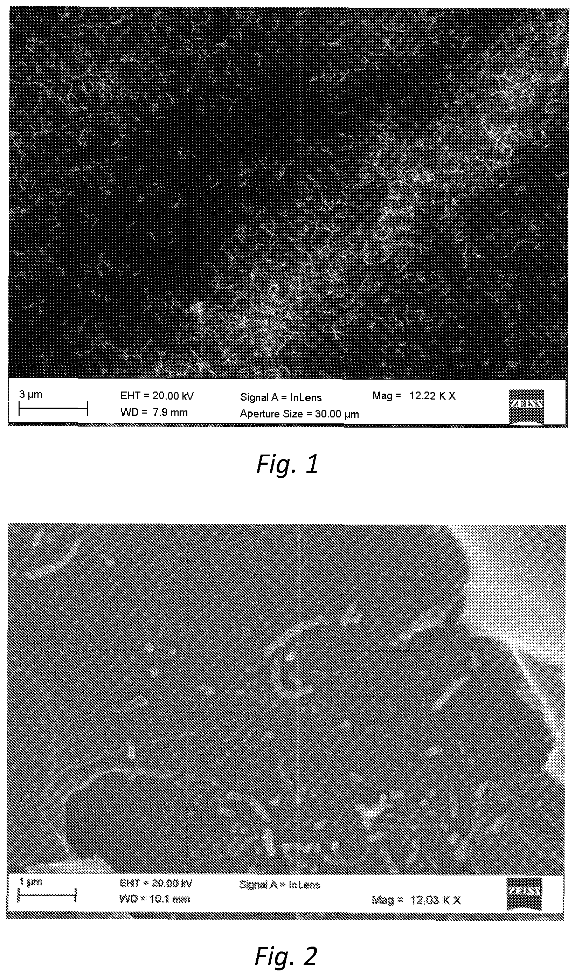

The fourth step of the process of the invention, d), includes the mechanical dispersion of MWCNTs in the fluid polymer, to obtain a homogeneous mixture. This operation has also the effect of separating individual MWCNTs (as shown in Figures 1 and 2), which after their production take the form of aggregates of multiple nanotubes. Step d) requires the forming mixture to be subjected to a shear stress of at least $3\times10^6$ Pa, or alternatively a shear stress of at least $1\times10^6$ Pa in several passes.

Shear stress is a physical quantity that measures the intensity of the tensions (expressed as force per unit area) that the fluid molecules exchange with each other and that they exchange with the physical system that contains them. This quantity is linked to the fluid dynamic viscosity, which is a measure of the fluid resistance to flow when a force is applied to it. Shear stress is measured in Pascal (Pa), and is defined by the formula:

$$\tau = \mu \; \frac{\delta u}{\delta y}$$

where:

$\tau$ is the shear stress;
$\mu$ is the dynamic viscosity of the system, which are measured in Pa·s and can be measured with special instruments (viscometers or rheometers);
y is the distance of the layer of generic fluid from a stationary plane;
$u(y)$ is the velocity of the fluid layer being considered (m/s); and
the ratio $\delta u/\delta y$ is the applied shear rate (measured in s$^{-1}$).

As indicated by the above formula, shear stress is given by the product between the shear rate and the dynamic viscosity of the fluid; consequently, to give the same shear stress to different fluids, a shear rate must be given which is as high as low is the viscosity of the fluid. For example, to give a shear stress of $1\times10^6$ Pa to a liquid with a viscosity of 0.1 Pa·s, a shear rate of $1\times10^7$ s$^{-1}$ should be applied, while to have the same shear stress value in a liquid with viscosity of 10 Pa·s a shear rate of $1\times10^5$ s$^{-1}$ will be enough.

In practice, shear stress depends on the energy that is transmitted to the fluid and the geometric conditions imposed by the system in which the fluid is forced to move. Mixers, agitators, dispersants and turbo-emulsifiers commonly used, consisting of a container in which one or more rotating impellers operate at high speeds, cannot impart levels of shear stress to the fluid sufficiently high to obtain a stable suspension (in which MWCNTs are dispersed) like the one forming the subject matter of the invention.

According to the invention, step d) can be carried out with a device known as "three roll mill", or by supplying the mixture with the energy necessary to force the fluid to pass through very small ducts which, due to the shear stress induced in this way, generate very high load drops in the system, as is the case, for example, of the dispersion system described in patent application EP 2868370 A1 in the name of the Applicant. A univocal and valid definition of the dimensions of the canalizations or of the operating parameters of operation for any specific apparatus is not possible; However, a person skilled in the art is able to evaluate the shear rate applied to the mixture in formation and from this value that of shear stress by knowing the viscosity of the inlet fluid, the dimensions of the ducts, and by controlling the energy transmitted by the apparatus to the fluid (pressure, effective flow rate, consumption in amperes).

By operating in accordance with the invention, the hanks of carbon nanotubes having the characteristics already described, are untangled and deagglomerated until the individual nanotubes are released, as shown by the photographs obtained at SEM (Figs. 1 and 2).

Optionally and preferably, step d) is preceded by a step c'), in which the suspension of MWCNTs in the polymer is premixed with normal stirring and mixing systems.

In a further embodiment, the process of the invention may include a final step e) that consists of cross-linking the polymer of the fluid suspension obtained in step d), that is, inducing a reaction between functional groups placed on adjacent polymer chains, thus creating a three-dimensional network of bonds that involves all the polymer chains present, which become in fact a single polymer macromolecule; in this way the three-dimensional structure of the polymer is fixed, making it rigid. Cross-linking of (thermo)hardening polymers is a well known phenomenon in the industry; it can be caused, depending on the nature of the polymer, by irradiation with UV radiation at an appropriate wavelength, or more commonly, for example, in the case of epoxides, by addition of chemical catalysts causing the cross-linking reaction, which are activated by a temperature rise above a critical value.

This operation can be carried out on the fluid suspension alone, to obtain samples or small mechanical parts or to carry out repairs or gluing of parts; alternatively, and more commonly, this operation is carried out after using the suspension of the invention to impregnate non-woven fabrics or fabrics, in order to obtain composite materials with improved structural properties (e.g. pre-preg type), or after distributing layers of fluid composition on a substrate, for example, to obtain conductive coatings or coatings having dampening properties on the vibrations of the parts on which they are formed.

In its second aspect, the invention concerns the fluid suspension obtained as a result of steps a) to d) described above.

The result of this process is a homogeneous and stable fluid suspension of MWCNTs dispersed in a polymer material. The inventors have found that, surprisingly, a suspension obtained by this process is stable over time, as verified with measurements of Dynamic Light Scattering, that is, it does not undergo flocculation and/or sedimentation of the MWCNTs for times of about one year (to date, inventors have observed the stability of the suspension for more than 300 days), as demonstrated below in the experimental section of this text.

This fluid and homogeneous suspension, stable over time, is the first product involved in the invention: unlike in the methods of the known technique, this suspension can be produced separately and used over a long period of time for the production of the final composite materials; it can therefore be transported and sold as a stand-alone product, and therefore has an independent commercial interest and value with respect to these final composites.

This suspension, depending on the use for which it is intended, can be stored in containers and sold separately from the cross-linking agent to be used, after mixing the two components for the production of fiber-reinforced resin components. Alternatively, the fluid suspension containing the MWCNTs can be combined, by mixing, with low reactivity cross-linking agents, such as, for example, diamino diphenyl sulphone or dicyandiamide. The system thus obtained is particularly well suited for the production of pre-preg, since it has a very low cross-linking rate at room temperature and thus can maintain pre-preg workability technical and performance characteristics for several weeks at room temperature, and for more than 12 months if stored at temperatures below -18 °C.

A second class of invention's products consists of composite materials obtained after the completion of the further step e) described above, which consist of a fully cross-linked polymer or resin matrix, in which MWCNTs are present in the above mentioned quantities.

The presence of hardened polymers of multi-walled carbon nanotubes, MWCNTs, improves technological properties (especially mechanical and electrical ones); Furthermore, the inventors have surprisingly found that, in particular, MWCNTs with an aspect ratio between 100 and 700 and added in quantities between 0.05 and 1 part by weight per 100 of polymer, increase stiffness (Young's modulus); while MWCNTs with aspect ratios greater than 1000 and added in amounts of 0.5 to 7 parts by weight per 100 of polymer, increase elongation at breakage, related to the ability to absorb more energy before breakage (tenacity). Preferably, MWCNTs of the second type have aspect ratio between 1000 and 2000.

Figure 1 shows an image obtained with a scanning electronic microscope (SEM) of the internal part of a composite material of the invention; the MWCNTs used for the production of the material in the photomicrograph, which are produced by Belgian company Nanocyl SA, had an average aspect ratio of 160 and a purity of 90%. The image is about 12,000 magnifications, and shows how surprisingly the MWCNTs are distributed discreetly and without the presence of agglomerates, although these nanotubes have not been superficially functionalized to improve their dispersion, as required in many scientific and patent literature in the art.

A further aspect of the invention relates to articles produced by impregnating fabrics, preferably in the form of multilayers, with a fluid suspension containing MWCNTs of the invention and subjecting the fabrics so impregnated and possibly shaped to complete cross-linking (curing) process. It is known to impregnate fabrics or layers of fabric with resins to make manufactures with structural functionality. Fibers can be impregnated with different methods, such as manual impregnation, infusion, Resin Transfer Molding, filament winding and variants thereof. In a preferred embodiment, impregnation is carried out by the technique known as pre-preg. In order to realize a pre-preg according to the present invention, fibers, in the form of unidirectional ribbon, fabric, or multiaxial fabric, in single layer or arranged in multiple overlaid layers, are arranged on a flat surface. The fabric layer thus obtained is then impregnated with the fluid suspension obtained after step d) of the process of the invention, i.e. after the high shear stress dispersion of the precursor and MWCNTs mixture, and following the addition of low reactivity cross-linking agents. The final polymerization (or curing) of the resin creates a rigid structure, in which the fabric has structural support (and in some cases aesthetic) function, while the composite of the invention forms a matrix in which the fibers of the fabric are dipped, preventing relative movements therof.

The last aspect of the invention relates to the possibility of obtaining, from the suspension of the invention, surface coatings or mechanical parts. These coatings are obtained by depositing or forming layers (generally not more than 1 mm thick) of the suspension on the concerned surface or mechanical part, and then cross-linking the polymer component of the suspension to strengthen the layers. These coatings may be produced to obtain electrically conductive layers; or, they may be formed on mechanical parts subject to vibrations to reduce the magnitude and permanence (duration in time) of the vibration of the part with the same stress induced by the vibration.

The invention will be further described by the following experimental part.

## EXAMPLE 1

This example relates to the production of a series of composite materials of the invention based on only epoxy resin.

As precursor of the epoxy component, product EC 157, a non-cross-linked epoxy resin with viscosity between 500 and 600 mPa·s, and as cross-linking agent product W 152 XLR (amine based) were used, both sold by ELANTAS Camattini S.p.A. Collecchio (PR); the two components were used in a 100:30 by weight ratio.

The carbon nanotubes used for the preparation of the samples are MWCNTs, having a purity (carbon content) of 90% and an average aspect ratio of 160, sold by Nanocyl SA, Sambreville (Belgium).

Starting from these precursors, three series of samples with different content of MWCNTs by weight were produced following the procedure described below; in particular, the content of MWCNTs of the three series of samples is 0.077, 0.154 and 0.385 parts by weight of nanotubes per 100 parts by weight of polymeric component (epoxy precursors + cross-linking) respectively. For comparison purposes, a series of resin samples were also produced without addition of MWCNTs.

For the preparation of the samples, the desired MWCNT amount was dispersed in 1 kg of epoxy precursor, initially by manual premixing and then by mixing with high shear stress using the mixing apparatus described in patent application EP 2868370 A1, with a shear stress of $2 \times 10^6$ Pa and performing two mixing cycles for the fluid inside the apparatus; this ensures homogeneous and stable dispersion over time of the MWCNTs.

0.3 kg of the above-described cross-linking agent were added to the epoxy precursor containing the MWCNTs, in quantities of 30 parts by weight of cross-linker per 100 parts by weight of epoxy precursor; the resulting mixture was mixed to allow dispersion of the cross-linking agent in the precursor and then subjected to degassing for 20 minutes under reduced pressure, between about 0.01 and 0.05 bar, and at room temperature.

At the end of this treatment, the resins loaded with nanotubes (as well as the comparison one, without MWCNTs) were poured into silicone molds of dimensions and shape suitable for the production of specimens on which mechanical characterizations were performed according to ASTM D 638 and ASTM D 695 M rules. The loaded resins were then cross-linked by a treatment having the following thermal profile:

- heating from room temperature T up to 35 °C at a rate of 1 °C/min;
- maintaining at 35 °C for 10 hours;
- heating from 35 °C up to 70 °C at a rate of 1 °C/min;
- maintaining at 70 °C for 7 hours;
- natural cooling up to room temeperature T.

The MWCNT content of the composite materials obtained (in parts by weight per 100 parts by weight of polymer component) is summarized in Table 1; the three samples according to the invention are designated respectively as C1-C3, while the sample C0* does not contain MWCNTs (the asterisk indicates a reference sample).

Table 1

| Sample | Content of MWCNTs |
| --- | --- |
| C0* | 0 |
| C1 | 0.077 |
| C2 | 0.154 |
| C3 | 0.385 |

## EXAMPLE 2

The procedure of Example 1 is repeated, but in this case MWCNTs are used that are produced and sold by the company Nanostructured & Amorphous Materials, Inc., and have an average aspect ratio of 1000. The MWCNTs are added to the resin in an amount of 1.15 parts by weight per 100 parts by weight of polymer component.
The sample obtained is referred to as sample C5.

## EXAMPLE 3

This example relates to the production of a pre-preg composite material.
As the liquid epoxy precursor for the dispersion of the MWCNTs already used in Example 1, Araldite GY 2600 from Huntsman International LLC was used.
A desired amount of MWCNTs was dispersed in 0.6 kg of epoxy precursor for the preparation of the samples, initially by premixing with a mixer, and then it was subjected to a high shear stress dispersion process using the mixing apparatus described in patent application EP 2868370 A1, with a shear stress of $2x10^6$ Pa and performing two mixing cycles for the fluid inside the apparatus; this ensures homogeneous dispersion of the MWCNTs.
Araldite GY 2600 liquid resin containing the nanotubes was then inserted into a mixer and 0.4 kg of Araldite GT 6097 solid resin from Huntsman was added. The whole of epoxy precursors was mixed at a temperature of 70 °C for 20 minutes and afterwards 0.076 kg of dicyandiamide cross-linking agent from Sigma-Aldrich Co. LLC and 0.020 kg of Aradur 3088 accelerating agent from Huntsman were added. The resulting mixture was mixed for further 10 minutes at a temperature between 65 and 70 °C and subjected to degassing at reduced pressure, ranging from 0.01 to 0.05 bar.
The final content of MWCNTs within the system thus composed is equal to 0.27 parts by weight of nanotubes per 100 parts by weight of polymer component (epoxy precursors + reticulant agent + accelerant agent). For comparison purposes, a resin sample was also produced using the same procedure as described above but without the addition of MWCNTs.
The resulting resin samples were then used for the production of pre-pregs based on high-strength T700S 12K carbon fiber from Toray Industries Inc. in the form of fiber spools better known to the filed operators as tow.
Pre-preg preparation steps are better described below:

- providing a fibrous mass in laminar form;
- producing a resin film onto a transfer support (silicone covered paper);
- impregnating step at a temperature of 70 °C, during which impregnation of the fibrous mass with the polymer composition is carried out;
- cooling the composite material thus obtained to room temperature.

The pre-preg thus obtained was then cut to size, stratified and finally subjected to autoclave treatment cycle at 6 bar pressure with a heat treatment having the following profile:

- heating from room temperature T up to 105 °C at a rate of 2 °C/min;
- maintaining at 105 °C for 0.5 hours;
- heating from 105 °C up to 120 °C at a rate of 1 °C/min;
- maintaining at 120 °C for 1 hour;
- natural cooling up to room temeperature T.

The panels thus obtained were machined to obtain specimens meeting the ASTM specifications for the tensile and three-point flexion tests of the same.

## EXAMPLE 4

The C1-C3 samples of the invention and the comparison C0* sample prepared as described in Example 1 were subjected to traction and compression tests, respectively according to ASTM D 638 and ASTM D 695 M standards. The deformation "full-field" analysis data were measured using a Q-400 DIC system of Dantec Dynamics A/S (Denmark).
The results of traction tests are given in Table 2, while those of the compression tests are shown in Table 3.

**Table 2**

| Sample | | $\sigma_{max}$ (MPa) | ε Y.P. (%) | breakage ε (%) | Young Modulus (GPa) |
|---|---|---|---|---|---|
| C0* | Average value | 73.96 | 4.14 | 4.765 | 3.301 |
| | Standard dev. | 1.32 | 0.13 | 0.19 | 0.37 |
| C1 | Average value | 73.93 | 4.07 | 4.698 | 3.640 |
| | Standard dev. | 1.72 | 0.64 | 1.34 | 0.39 |
| C2 | Average value | 72.09 | 3.19 | 3.273 | 3.890 |
| | Standard dev. | 2.28 | 0.25 | 0.27 | 0.2 |

**Table 3**

| Sample | | $\sigma_{max}$ (MPa) | ε Y.P. (%) | Young Modulus (GPa) |
|---|---|---|---|---|
| C0* | Average value | 94.86 | 4.9 | 2.845 |
| | Standard dev. | 4.65 | 0.36 | 0.15 |
| C1 | Average value | 96.92 | 3.91 | 2.900 |
| | Standard dev. | 3.91 | 0.71 | 0.18 |
| C2 | Average value | 106.27 | 3.8 | 2.963 |
| | Standard dev. | 3.5 | 0.69 | 0.4 |
| C3 | Average value | 113.74 | 6.48 | 3.220 |
| | Standard dev. | 3.38 | 2.08 | 0.18 |

## EXAMPLE 5

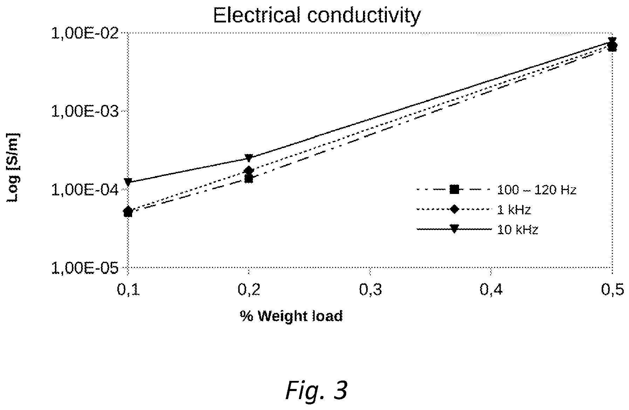

The C1-C3 samples prepared in Example 1 were subjected to electrical conduction tests at three different alternating current frequencies. The test results are summarized in Figure 3 and show a monotonous increase in electrical conductivity as the amount of MWCNTs loaded in the resin increases.

## EXAMPLE 6

Sample C5 has been subjected to traction tests as reported in Example 4.
The test results are shown in Table 4, together with the results obtained on an epoxy resin sample that was not loaded with MWCNTs (C0*).

**Table 4**

| Sample | | $\sigma_{max}$ (MPa) | ε Y.P. (%) | breakage ε (%) | Young Modulus (GPa) |
|---|---|---|---|---|---|
| C0* | Average value | 74.0 | 4.14 | 4.76 | 3.30 |
| | Standard dev. | 1.32 | 0.13 | 0.19 | 0.37 |
| C5 | Average value | 72.54 | 4.28 | 5.26 | 3.18 |
| | Standard dev. | 1.89 | 0.16 | 0.48 | 0.12 |
| | Variation | -1.97% | 3.38% | 10.50% | -3.63% |

## EXAMPLE 7

In this example, non-cross-linked resin loaded with MWCNTs used to prepare C1 and C2 samples has been subjected, at increasing temporal intervals, to the Dynamic Light Scattering (DLS) measurement technique to characterize its dispersion stability over time.

According to this technique, the sample is hit by a laser beam and the variations in the intensity of light diffused by the sample are measured as a function of time. These variations are due to the Brownian movement of nanoparticles, and therefore depend on their size: the smaller the nanoparticles, the quicker their movements, this resulting in rapid changes in the scattering intensity. Subsequently, the rate of the intensity fluctuations is processed through a correlation function to obtain the nanoparticle diffusion coefficient from which, by means of the Stokes-Einstein equation, the average hydrodynamic diameter can be reckoned.

During preparation of samples C1 and C2, a portion of resin loaded with MWCNTs was taken and subjected to dispersion of these latter, i.e. the composition obtained after step d) of the process of the invention; this resin was diluted in the same samples C1 and C2 (EC 157) forming resin by adding 9 g EC 157 resin to 0.06 g resin of the invention and the resulting composition was shaken with a vortex type shaker, left to rest for 12 hours and brought to a temperature of 25 °C before making the measurement.

The two loaded resin samples thus obtained were measured using DLS technique, using the Zetasizer Nano ZEN 1600 model instrument of Malvern Instruments Ltd. The following instrument settings have been provided for testing:

- the refractive index for the nanotubes used was set at 0.1, the absorption index at 0.99;
- using the same resin (EC157) as diluent, the following parameters have been set: temperature 25 °C, viscosity 567 mPa·s and refractive index 1.55;
- measurement was made at 25 °C; the thermal equilibrium of the sample was ensured by thermostating the sample at 25 °C for 20 minutes;
- duration of the measure: an automatic option has been used, according to which the software evaluates the number of repetitions (called runs) best for the type of sample being analyzed, which is 6.

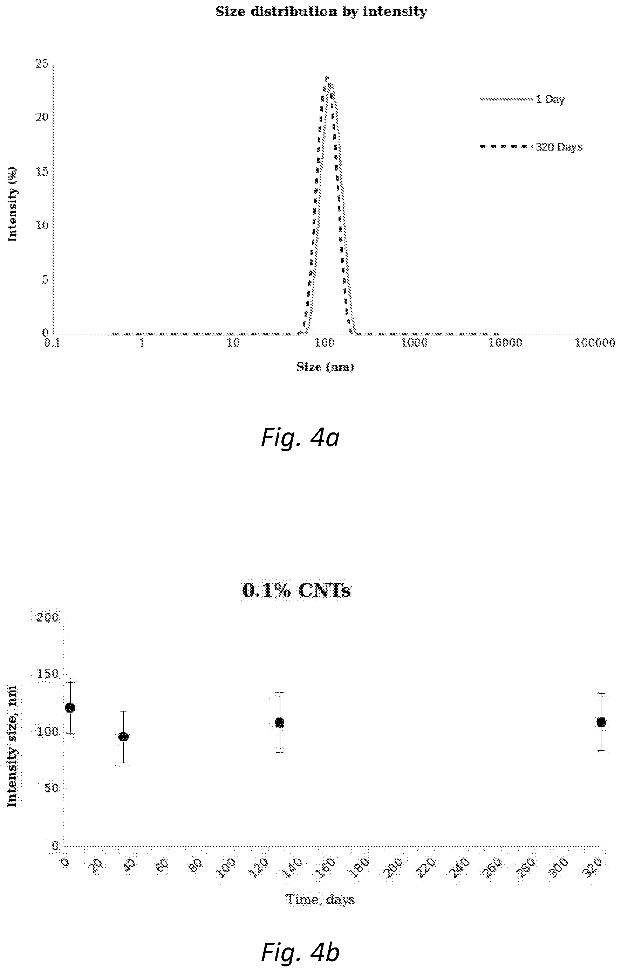

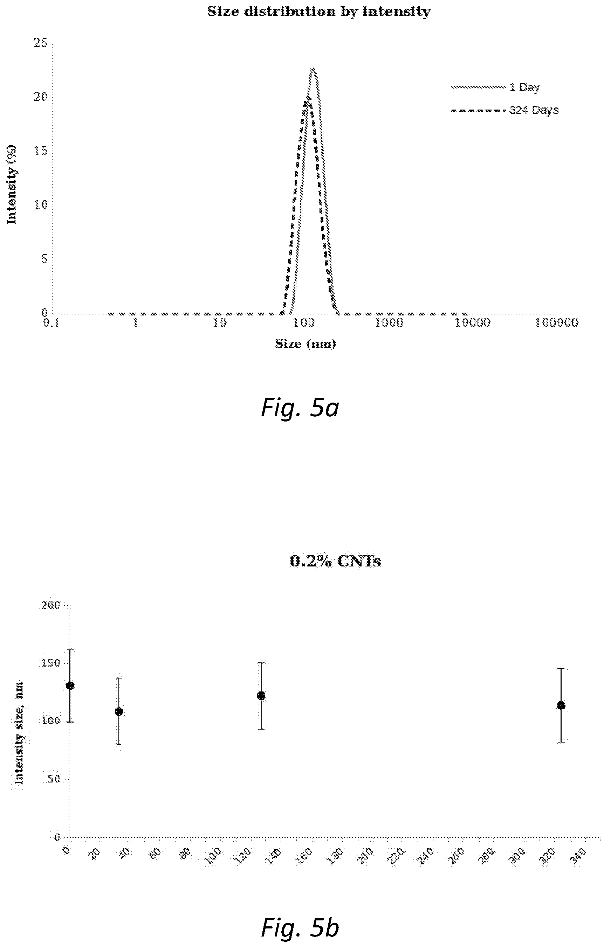

The test results are shown in Figures 4 and 5, which show how the particle dimensional distribution remains substantially unchanged over time in both cases.

In particular, Figure 4a shows two dimensional distribution curves, obtained respectively 1 day and 320 days after the preparation of the suspension used for the production of sample C1; in the curves of these diagrams the maximum peak value is proportional to the quantity of counted particles, while the position of the maximum and the amplitude at the base of the peak indicate the most frequent particle size in the sample and the variability of this size, respectively. As shown in Fig. 4a, the height, position of the maximum and amplitude at the base of the peak are practically unchanged in both the 1-day and 320-day tests. The substantial constancy of the height of the peak indicates that there was no sedimentation of MWCNTs (sedimentation involves a decrease in the number of suspended particles and, therefore, it would have given rise to a significant decrease in the height of the peak); instead, the substantial constancy of the position of the peak maximum indicates that MWCNTs did not give rise to aggregation or flocculation events, which would have led to a shift towards greater values of the position of the peak (bigger particles). Fig. 4b shows in another way the results obtained from these tests; in this case the position values of the maximum and the peak width (indicated respectively by the point and by the bar in the figure) are reported as a function of time; the values of the 33 and 127 day measurements are also reported, for which the curves in Fig. 4a are not shown in order not to reduce their readability; As it can be seen from the figure, the trend of the position values of the maximum and amplitude of the peak is essentially horizontal, thus indicating that the dimensions of the particles measured in the test are substantially unchanged over time.

Figures 5a and 5b are similar to Figures 4a and 4b but were obtained on the suspension used for the production of sample C2. In this case, measurements were made 1 day, 33 days, 127 days and 324 days after the preparation of the suspension; Only the 1 and 324 day curves are shown in Fig. 5a to allow better legibility of the figure, while Fig. 5b shows the results of all four tests. Also in this case, the trend of the position values of the maximum and amplitude of the peak indicates that the dimensions of the particles measured in the test are substantially unchanged over time.

These results confirm that the suspensions obtained by the process of the invention are stable over time, and that MWCNTs do not undergo aggregation, flucculation and sedimentation at least within a few months; dispersions can therefore be stored for relatively long periods after their preparation and before cross-linking.

## EXAMPLE 8

Samples obtained in Example 3 were subjected to traction and flexion tests according to ASTM D3039 and ASTM D790 standards.

The fabric impregnated with resin (either of the invention or not) was in all cases of T700S type from Toray Industries Inc. in a one-way arrangement.

In addition, all values are normalized to a fraction by volume of fiber of 60% (and hence a resin fraction by volume of 40%), which is a standard mode to compare different samples in the field.

Test results are shown in Table 5 below. For comparison purpose, the table also shows the mechanical characteristics of two commercial Toray products similar to the sample of the invention, as reported in the manufacturer's technical sheets. The table shows the quantities measured for both the fiber and the composite obtained with it (the units of measurement concerning the values given for each quantity are given in parentheses).

**Table 5**

|  | Product | | |
|---|---|---|---|
|  | Invention (Ex. 3) | Toray 250 F | Toray S-T 350 F |
| Resin weight (%) | 40 | / | / |
| Weight/unit area (g/m$^2$) | 200 | / | / |
| Weight of MWCNTs (%) | 0.22 | / | / |
| Tensile strength of fiber (MPa) | 4900 | 4900 | 4900 |
| Fiber Elastic Modulus (GPa) | 230 | 230 | 230 |
| Tensile strength of composite (MPa) | 2731 | 2550 | 2450 |
| Composite traction elastic modulus (GPa) | 149.76 | 135 | 125 |
| Composite bending strength (MPa) | 1635 | 1670 | / |
| Composite bending elastic modulus (GPa) | 136 | 120 | / |

## EXAMPLE 9

A suspension of the invention was used to produce a coating of cymbals for drumkit, to verify the damping properties of the vibrations conferred on the bars by the coating of polymer containing MWCNTs obtained from a suspension of the invention.

Two cymbals of Soundsation Thin Crash S-CY-FW-16TC Forward series sold by Frenexport of Porto Recanati (MC), Italy, were purchased; the cymbals have a diameter of about 40 cm (16").

One cymbal (cymbal no. 1) has been coated with a suspension produced as described in Example 1, with content of 0.385 parts by weight of MWCNTs. This suspension was diluted with methyl-ethylketone and applied by spraying (a single layer) on both sides of the cymbal, left to air dry first for 24 hours, and finally in the oven at 70 °C for one hour; in this last step, the complete cross-linking of the epoxy resin of the suspension is carried out. After coating, this cymbal shows an average thickness (measured on several points) of 1.21 mm, and an overall weight of 1059 g.

Cymbal No. 2 was left uncoated to make a comparison measurement; this cymabal has an average thickness of 0.95 mm and a weight of 1014 g.

For each cymbal, the sound caused by the fall of a 24.8 g object from a fixed height of 30 cm was acquired in a recording studio. The acoustic analysis of the recorded sounds was carried out using Praat software, available free of charge on the Internet.

Table 6 shows the acoustic energy values of the sounds emitted following the fall of the object on each of the two samples under examination and the corresponding percentage reduction of energy. The sound energy analysis concerns the first 5 seconds from the beginning of the emitted sound, as the whole sound wave under examination in included within this range.

**Table 6**

| Sample | Average acoustic energy, J/m$^2$ | Energy reduction, % |
|---|---|---|
| Cymbal No. 1 | 5.9 x10$^{-6}$ | 49 |
| Cymbal No. 2 | 8.8 x10$^{-6}$ | / |

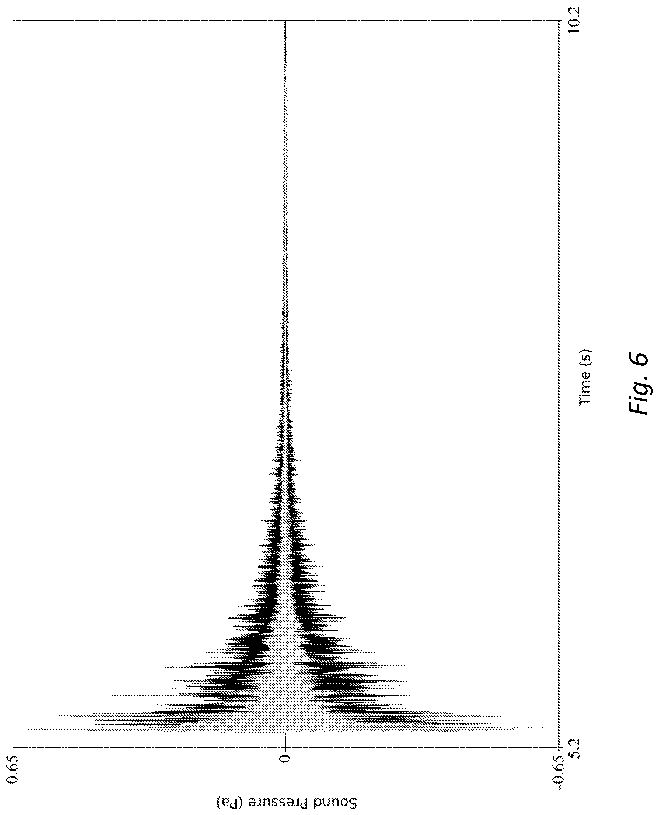

The test result is shown in graphical form in Figure 6, where the magnitude of the sound pressure exerted by a vibrating cymbal is shown (this is directly proportional to the vibration amplitude of the cymbal itself): the pale inner area represents the pressure of the cymbal coated in accordance with the invention, while the darker outer area represents the pressure of the uncoated cymbal.

## Comment on the results

The DLS measurements, carried out on samples of suspension of the invention at various times over the course of almost a year, show that these suspensions are completely stable over time and do not give rise to sedimentation or flocculation/aggregation of MWCNTs; this confirms that the suspension can also be stored for a long time pending its use in any of the various possible applications.

In the case of MWCNTs with an aspect ratio less than 700 (C1-C3 samples) compression tests show a clear increase in resistance along with a moderate increase in the modulus (Table 3). The analysis of compression tests shows a reduction in breakage elongation at low nanotube loads followed by an increase due to loading 0.385 parts by weight of MWCNTs per 100 parts by weight of polymer component. The tensile test shows a remarkable increase in the elastic modulus as the MWCNTs amount by weight increases. Tensile strength does not vary considerably while elongation at breaks decreases.

In the case of MWCNTs with an aspect ratio greater than 1000, the results show an increase in breakage elongation of about 10% at the expense of a slight decrease of 3.8% of the elastic modulus (Young modulus), resulting in increased energy needed to break the material.

The pre-preg obtained in Example 3 and tested in Example 8 is characterized by a higher traction and flexion elastic modulus than the pre-preg obtained with a resin not containing MWCNTs, that is 13.6% and 4.9%, respectively. Tensile and bending strength increases by a few percentage points. These data, when compared with the pre-preg ones obtained from the same fiber and resins with comparable technical characteristics, place the nano-loaded pre-preg at higher or anyway comparable levels with respect to the best existing products on the market today. Therefore, the resin loaded with MWCNTs according to the invention allows best exploitment of the fiber characteristics, thus obtaining a composite material characterized by significant performances without the need to use solvents or chemical functionalisations aimed at obtaining an adequate dispersion of CNTs.

Finally, Example 9 clearly demonstrates the damping effect of stress-related vibrations that is achieved by coating a structure (in the example, drumkit cymbals) with a layer of the suspension of the invention, that has been cured by cross-linking.

## Claims

**1.** Process for the production of a suspension that is fluid, homogeneous and stable more than 300 days, consisting of a polymeric matrix in which multiple-walled carbon nanotubes (MWCNTs) are dispersed, the process including the steps of:

a) providing a polymeric material that composes the fluid matrix of the suspension, the polymeric material being selected among epoxy resins, phenolic resins, bismaleimide resins, silicone resins, vinyl esters and mixtures thereof;
b) providing non-superficially functionalized multi-walled carbon nanotubes, MWCNTs, having diameter ranging from 3 to 30 nm;
c) adding said MWCNTs to said polymeric material without the aid of a solvent;
d) dispersing the MWCNTs into the resulting mixture, without using solvents, by a mechanical dispersion method and applying, in a single action, a shear stress with a minimum value of $3 \times 10^6$ Pa or alternatively, in more than one action, a shear stress of at least $1 \times 10^6$ Pa;
wherein the MWCNTs added in step c):

- have an aspect ratio between 100 and 700 and are added in an amount between 0.05 and 1 parts by weight per 100 parts by weight of polymeric material;
or:
- have an aspect ratio greater than 1000 and are added in an amount between 0.5 and 7 parts by weight per 100 parts by weight of polymeric material.

**2.** Process according to claim 1, wherein said polymeric material is an epoxy resin.

**3.** Process according to any one of claims 1 or 2, further comprising a step c'), carried out between steps c) and d), which consists in premixing the non-superficially functionalized MWCNTs in the fluid polymer.

4. Process according to any one of previous claims, wherein step d) is carried out by forcing the mixture to pass through micro-ducts.

5. Process according to any one of the previous claims, including a final step e), to be carried out after step d), which consists in determining the formation of a polymer hardened by cross-linking of said fluid suspension by UV treatment or by thermal reaction catalysed with chemical catalysts.

6. A fluid suspension stable for more than 300 days, comprising:

    - a matrix consisting of a fluid polymer selected among epoxy resins, phenolic resins, bismaleimide resins, silicone resins, and vinyl esters; and
    - untangled non-superficially functionalized multi-walled carbon nanotubes (MWCNTs) with a diameter between 3 and 30 nm individually dispersed in the matrix in an amount between 0.05 and 1 part by weight per 100 parts by weight of polymeric material, in case of MWCNTs having an aspect ratio between 100 and 700, or added in an amount between 0.5 and 7 parts by weight per 100 parts by weight of polymeric material, in case of MWCNTs having an aspect ratio greater than 1000.

7. A fluid suspension according to claim 6, further comprising a low reactivity cross-linker selected from diamino diphenyl sulphone or dicyandiamide, stable for several weeks at room temperature and for more than 12 months at -18 °C.

8. Use of the suspension of any of claims 6 or 7, for the production of a composite material obtained by cross-linking a polymer, consisting solely of polymer, cross-linker and untangled carbon nanotubes individually dispersed in the polymeric matrix.

9. Use of the suspension of any of claims 6 or 7, for the production of a composite material obtained by cross-linking a polymer, comprising fibres, which are loose, woven or in the form of non-woven fabric impregnated with such suspension.

10. Use according to claim 9, wherein said fabrics of nonwoven fabrics are arranged in several superimposed layers.

11. Use according to any one of claims 9 or 10, wherein the fibres are impregnated with said suspension by manual impregnation, infusion, Resin Transfer Moulding, filament winding, pre-preg and variants thereof.

12. Use of the suspension of any of claims 6 or 7, for the production of an electrically conductive coating.

13. Use of the suspension of any of claims 6 or 7, for the production of a vibration-damping coating of the mechanical part to which it is applied.

14. A composite material comprising:

    - a matrix consisting of a fluid polymer selected among epoxy resins, phenolic resins, bismaleimide resins, silicone resins, and vinyl esters; and
    - untangled non-superficially functionalized multi-walled carbon nanotubes (MWCNTs) with a diameter between 3 and 30 nm individually dispersed in the matrix in an amount between 0.05 and 1 part by weight per 100 parts by weight of polymeric material, in case of MWCNTs having an aspect ratio between 100 and 700, or added in an amount between 0.5 and 7 parts by weight per 100 parts by weight of polymeric material, in case of MWCNTs having an aspect ratio greater than 1000.

15. A product comprising:

    - a matrix consisting of a fluid polymer selected among epoxy resins, phenolic resins, bismaleimide resins, silicone resins, and vinyl esters;
    - untangled non-superficially functionalized multi-walled carbon nanotubes (MWCNTs) with a diameter between 3 and 30 nm individually dispersed in the matrix in an amount between 0.05 and 1 part by weight per 100 parts by weight of polymeric material, in case of MWCNTs having an aspect ratio between 100 and 700, or added in an amount between 0.5 and 7 parts by weight per 100 parts by weight of polymeric material, in case of MWCNTs having an aspect ratio greater than 1000; and
    - fibres that are loose, woven or in the form of non-woven fabric impregnated by said MWCNTs-containing matrix;

said product obtained by subjecting the fabric thus impregnated and possibly shaped to a cross-linking process of the resin.

16. A product comprising:

- a matrix consisting of a fluid polymer selected among epoxy resins, phenolic resins, bismaleimide resins, silicone resins, and vinyl esters;
- untangled non-superficially functionalized multi-walled carbon nanotubes (MWCNTs) with a diameter between 3 and 30 nm individually dispersed in the matrix in an amount between 0.05 and 1 part by weight per 100 parts by weight of polymeric material, in case of MWCNTs having an aspect ratio between 100 and 700, or added in an amount between 0.5 and 7 parts by weight per 100 parts by weight of polymeric material, in case of MWCNTs having an aspect ratio greater than 1000; and
- a structural, support or mechanical part coated with a layer of said MWCNTs-containing matrix;

said product obtained by subjecting said matrix to a cross-linking process.


**Patentansprüche**

1. Verfahren zur Herstellung einer Suspension, die flüssig, homogen und über 300 Tage stabil ist, bestehend aus einer Polymermatrix, in der mehrwandige Kohlenstoffnanoröhren (MWCNT, multiple-walled carbon nanotubes) dispergiert sind, wobei das Verfahren die Schritte umfasst:

a) Bereitstellen eines Polymermaterials, das die flüssige Matrix der Suspension bildet, wobei das Polymermaterial aus Epoxidharzen, Phenolharzen, Bismaleimidharzen, Silikonharzen, Vinylestern und Mischungen davon ausgewählt ist;
b) Bereitstellen von nicht oberflächenfunktionalisierten mehrwandigen Kohlenstoffnanoröhren (MWCNT), die einen Durchmesser im Bereich von 3 bis 30 nm aufweisen;
c) Zugeben der MWCNT zu dem Polymermaterial ohne Verwendung eines Lösungsmittels;
d) Dispergieren der MWCNT in der resultierenden Mischung ohne Verwendung von Lösungsmitteln durch ein mechanisches Dispergierverfahren und Aufbringen einer Scherspannung mit einem Mindestwert von $3 \times 10^6$ Pa in einem einzigen Vorgang oder alternativ einer Scherspannung von mindestens $1 \times 10^6$ Pa in mehr als einem Vorgang;

wobei die in Schritt c) zugegebenen MWCNT:

- ein Seitenverhältnis zwischen 100 und 700 aufweisen und in einer Menge zwischen 0,05 und 1 Gewichtsteilen pro 100 Gewichtsteile des Polymermaterials zugegeben werden;
oder:

- ein Seitenverhältnis von mehr als 1000 aufweisen und in einer Menge zwischen 0,5 und 7 Gewichtsteilen pro 100 Gewichtsteile des Polymermaterials zugegeben werden.

2. Verfahren nach Anspruch 1, wobei das Polymermaterial ein Epoxidharz ist.

3. Verfahren nach einem der Ansprüche 1 oder 2, das ferner einen Schritt c') umfasst, der zwischen den Schritten c) und d) durchgeführt wird und darin besteht, die nicht oberflächenfunktionalisierten MWCNT in dem flüssigen Polymer vorzumischen.

4. Verfahren nach einem der vorhergehenden Ansprüche, wobei Schritt d) durchgeführt wird, indem die Mischung durch Mikrokanäle gedrückt wird.

5. Verfahren nach einem der vorhergehenden Ansprüche, das einen abschließenden Schritt e) umfasst, der nach Schritt d) durchgeführt wird und darin besteht, die Bildung eines durch Vernetzung der flüssigen Suspension durch UV-Behandlung oder durch mit chemischen Katalysatoren katalysierte thermische Reaktion gehärteten Polymers zu bestimmen.

6. Flüssige Suspension, die über 300 Tage stabil ist und umfasst:

- eine Matrix, die aus einem flüssigen Polymer, das aus Epoxidharzen, Phenolharzen, Bismaleimidharzen, Silikonharzen und Vinylestern ausgewählt ist, besteht; und
- entwirrte, nicht oberflächenfunktionalisierte mehrwandige Kohlenstoffnanoröhren (MWCNT) mit einem Durchmesser zwischen 3 und 30 nm, die einzeln in der Matrix in einer Menge zwischen 0,05 und 1 Gewichtsteil pro 100 Gewichtsteile Polymermaterial im Fall von MWCNT mit einem Seitenverhältnis zwischen 100 und 700 dispergiert sind, oder in einer Menge zwischen 0,5 und 7 Gewichtsteilen pro 100 Gewichtsteile Polymermaterial im Fall von MWCNT mit einem Seitenverhältnis von mehr als 1000 zugegeben werden.

7. Flüssige Suspension nach Anspruch 6, die ferner einen Vernetzer mit geringer Reaktivität umfasst, der aus Diaminodiphenylsulfon oder Dicyandiamid ausgewählt ist und bei Raumtemperatur mehrere Wochen und bei -18 °C mehr als 12 Monate lang stabil ist.

8. Verwendung der Suspension nach einem der Ansprüche 6 oder 7 zur Herstellung eines Verbundmaterials, das durch Vernetzung eines Polymers erhalten wird und ausschließlich aus Polymer, Vernetzer und entwirrten Kohlenstoffnanoröhren besteht, die einzeln in der Polymermatrix dispergiert sind.

9. Verwendung der Suspension nach einem der Ansprüche 6 oder 7 zur Herstellung eines Verbundmaterials, das durch Vernetzung eines Polymers erhalten wird, das Fasern umfasst, die lose, gewebt oder in Form von Vliesstoffen vorliegen, die mit einer solchen Suspension imprägniert sind.

10. Verwendung nach Anspruch 9, wobei die Vliesstoffe in mehreren übereinanderliegenden Schichten angeordnet sind.

11. Verwendung nach einem der Ansprüche 9 oder 10, wobei die Fasern durch manuelles Imprägnieren, Infusion, Harztransferformung, Filamentwickeln, Prepreg und Varianten davon mit der Suspension imprägniert werden.

12. Verwendung der Suspension nach einem der Ansprüche 6 oder 7 zur Herstellung einer elektrisch leitfähigen Beschichtung.

13. Verwendung der Suspension nach einem der Ansprüche 6 oder 7 zur Herstellung einer vibrationsdämpfenden Beschichtung des mechanischen Teils, auf das sie aufgebracht wird.

14. Verbundmaterial, umfassend:

- eine Matrix, die aus einem flüssigen Polymer, das aus Epoxidharzen, Phenolharzen, Bismaleimidharzen, Silikonharzen und Vinylestern ausgewählt ist, besteht; und
- entwirrte, nicht oberflächenfunktionalisierte mehrwandige Kohlenstoffnanoröhren (MWCNT) mit einem Durchmesser zwischen 3 und 30 nm, die einzeln in der Matrix in einer Menge zwischen 0,05 und 1 Gewichtsteil pro 100 Gewichtsteile Polymermaterial im Fall von MWCNT mit einem Seitenverhältnis zwischen 100 und 700 dispergiert sind, oder in einer Menge zwischen 0,5 und 7 Gewichtsteilen pro 100 Gewichtsteile Polymermaterial im Fall von MWCNT mit einem Seitenverhältnis von mehr als 1000 zugegeben werden.

15. Produkt, umfassend:

- eine Matrix, die aus einem flüssigen Polymer, das aus Epoxidharzen, Phenolharzen, Bismaleimidharzen, Silikonharzen und Vinylestern ausgewählt ist, besteht;
- entwirrte, nicht oberflächenfunktionalisierte mehrwandige Kohlenstoffnanoröhren (MWCNT) mit einem Durchmesser zwischen 3 und 30 nm, die einzeln in der Matrix in einer Menge zwischen 0,05 und 1 Gewichtsteil pro 100 Gewichtsteile Polymermaterial im Fall von MWCNT mit einem Seitenverhältnis zwischen 100 und 700 dispergiert sind, oder in einer Menge zwischen 0,5 und 7 Gewichtsteilen pro 100 Gewichtsteile Polymermaterial im Fall von MWCNT mit einem Seitenverhältnis von mehr als 1000 zugegeben werden; und
- Fasern, die lose, gewebt oder in Form von Vliesstoffen vorliegen, die mit der MWCNT-haltigen Matrix imprägniert sind;

wobei das Produkt erhalten wird, indem der so imprägnierte und gegebenenfalls geformte Stoff einem Vernetzungsprozess des Harzes unterzogen wird.

16. Produkt, umfassend:

- eine Matrix, die aus einem flüssigen Polymer, das aus Epoxidharzen, Phenolharzen, Bismaleimidharzen, Silikonharzen und Vinylestern ausgewählt ist, besteht;
- entwirrte, nicht oberflächenfunktionalisierte mehrwandige Kohlenstoffnanoröhren (MWCNT) mit einem Durchmesser zwischen 3 und 30 nm, die einzeln in der Matrix in einer Menge zwischen 0,05 und 1 Gewichtsteil pro 100 Gewichtsteile Polymermaterial im Fall von MWCNT mit einem Seitenverhältnis zwischen 100 und 700 dispergiert sind, oder in einer Menge zwischen 0,5 und 7 Gewichtsteilen pro 100 Gewichtsteile Polymermaterial im Fall von MWCNT mit einem Seitenverhältnis von mehr als 1000 zugegeben werden; und
- ein strukturelles, tragendes oder mechanisches Teil, das mit einer Schicht aus der MWCNT-haltigen Matrix beschichtet ist;

wobei das Produkt erhalten wird, indem die Matrix einem Vernetzungsprozess unterzogen wird.

## Revendications

1. Procédé de production d'une suspension qui soit fluide, homogène et stable pendant plus de 300 jours, constituée d'une matrice polymère dans laquelle sont dispersés des nanotubes de carbone à parois multiples (en Anglais « multiple-walled carbon nanotubes » pour MWCNTs), le procédé comprenant les étapes suivantes :

   a) fournir un matériau polymère qui compose la matrice fluide de la suspension, le matériau polymère étant choisi parmi les résines époxy, les résines phénoliques, les résines de bismaléimide, les résines de silicone, les esters vinyliques et leurs mélanges ;
   b) fournir des nanotubes de carbone à parois multiples non superficiellement fonctionnalisés, MWCNTs, ayant un diamètre allant de 3 à 30 nm ;
   c) ajouter lesdits MWCNTs audit matériau polymère sans l'aide d'un solvant ;
   d) disperser les MWCNTs dans le mélange résultant, sans utiliser de solvants, par un procédé de dispersion mécanique et appliquer, en une seule action, une contrainte de cisaillement d'une valeur minimale de $3x10^6$ Pa ou bien, en plus d'une action, une contrainte de cisaillement d'au moins $1x10^6$ Pa ;

   dans lequel les MWCNTs ajoutés à l'étape c) :

   - ont un rapport d'aspect compris entre 100 et 700 et sont ajoutés en une quantité entre 0,05 et 1 partie en poids pour 100 parties en poids de matériau polymère ;
   ou :

      - ont un rapport d'aspect supérieur à 1000 et sont ajoutés en une quantité entre 0,5 et 7 parties en poids pour 100 parties en poids de matériau polymère.

2. Procédé selon la revendication 1, dans lequel ledit matériau polymère est une résine époxy.

3. Procédé selon l'une quelconque des revendications 1 ou 2, comprenant en outre une étape c'), réalisée entre les étapes c) et d), qui consiste à prémélanger les MWCNTs non fonctionnalisés superficiellement dans le polymère fluide.

4. Procédé selon l'une quelconque des revendications précédentes, dans lequel l'étape d) est réalisée en forçant le mélange à passer à travers des microconduits.

5. Procédé selon l'une quelconque des revendications précédentes, comprenant une étape finale e), à réaliser après l'étape d), qui consiste à déterminer la formation d'un polymère durci par réticulation de ladite suspension fluide par traitement UV ou par réaction thermique catalysée par des catalyseurs chimiques.

6. Suspension fluide stable pendant plus de 300 jours, comprenant :

   - une matrice constituée d'un polymère fluide choisi parmi les résines époxy, les résines phénoliques, les résines de bismaléimide, les résines de silicone et les esters vinyliques ; et
   - des nanotubes de carbone à parois multiples non fonctionnalisés superficiellement désagrégés (MWCNTs) d'un diamètre entre 3 et 30 nm dispersés individuellement dans la matrice en une quantité comprise entre 0,05 et 1 partie en poids pour 100 parties en poids de matériau polymère, dans le cas des MWCNTs ayant un rapport d'aspect entre 100 et 700, ou ajoutés en une quantité entre 0,5 et 7 parties en poids pour 100 parties en poids de matériau polymère, dans le cas des MWCNTs ayant un rapport d'aspect supérieur à 1000.

7. Suspension fluide selon la revendication 6, comprenant en outre un réticulant à faible réactivité choisi parmi la diamino diphényl sulfone ou le dicyandiamide, stable pendant plusieurs semaines à température ambiante et pendant plus de 12 mois à -18 °C.

8. Utilisation de la suspension selon l'une quelconque des revendications 6 ou 7, pour la production d'un matériau composite obtenu par réticulation d'un polymère, constitué uniquement de polymère, de réticulant et de nanotubes de carbone désagrégés dispersés individuellement dans la matrice polymère.

9. Utilisation de la suspension selon l'une quelconque des revendications 6 ou 7, pour la production d'un matériau composite obtenu par réticulation d'un polymère, comprenant des fibres, qui sont lâches, tissées ou sous forme de tissu non-tissé imprégné d'une telle suspension.

10. Utilisation selon la revendication 9, dans laquelle lesdits tissus de tissus non-tissés sont disposés en plusieurs couches superposées.

11. Utilisation selon l'une quelconque des revendications 9 ou 10, dans laquelle les fibres sont imprégnées de ladite suspension par imprégnation manuelle, infusion, moulage par transfert de résine, enroulement filamentaire, préimprégné et leurs variantes.

12. Utilisation de la suspension selon l'une quelconque des revendications 6 ou 7, pour la production d'un revêtement électriquement conducteur.

13. Utilisation de la suspension selon l'une quelconque des revendications 6 ou 7, pour la production d'un revêtement amortissant les vibrations de la pièce mécanique sur laquelle elle est appliquée.

14. Matériau composite comprenant :

   - une matrice constituée d'un polymère fluide choisi parmi les résines époxy, les résines phénoliques, les résines de bismaléimide, les résines de silicone et les esters vinyliques ; et
   - des nanotubes de carbone à parois multiples non fonctionnalisés superficiellement désagrégés (MWCNTs) d'un diamètre entre 3 et 30 nm dispersés individuellement dans la matrice en une quantité comprise entre 0,05 et 1 partie en poids pour 100 parties en poids de matériau polymère, dans le cas des MWCNTs ayant un rapport d'aspect entre 100 et 700, ou ajoutés en une quantité entre 0,5 et 7 parties en poids pour 100 parties en poids de matériau polymère, dans le cas des MWCNTs ayant un rapport d'aspect supérieur à 1000.

15. Produit comprenant :

   - une matrice constituée d'un polymère fluide choisi parmi les résines époxy, les résines phénoliques, les résines de bismaléimide, les résines de silicone et les esters vinyliques ;
   - des nanotubes de carbone à parois multiples non fonctionnalisés superficiellement désagrégés (MWCNTs) d'un diamètre compris entre 3 et 30 nm dispersés individuellement dans la matrice en une quantité comprise entre 0,05 et 1 partie en poids pour 100 parties en poids de matériau polymère, dans le cas des MWCNTs ayant un rapport d'aspect compris entre 100 et 700, ou ajoutés en une quantité comprise entre 0,5 et 7 parties en poids pour 100 parties en poids de matériau polymère, dans le cas des MWCNTs ayant un rapport d'aspect supérieur à 1000 ; et
   - des fibres lâches, tissées ou sous forme de tissu non-tissé imprégné par ladite matrice contenant des MWCNTs ;

   ledit produit obtenu en soumettant le tissu ainsi imprégné et éventuellement mis en forme à un processus de réticulation de la résine.

16. Produit comprenant :

   - une matrice constituée d'un polymère fluide choisi parmi les résines époxy, les résines phénoliques, les résines de bismaléimide, les résines de silicone et les esters vinyliques ;
   - des nanotubes de carbone à parois multiples non fonctionnalisés superficiellement désagrégés (MWCNTs) d'un diamètre compris entre 3 et 30 nm dispersés individuellement dans la matrice en une quantité comprise entre 0,05 et 1 partie en poids pour 100 parties en poids de matériau polymère, dans le cas des MWCNTs ayant un rapport d'aspect compris entre 100 et 700, ou ajoutés en une quantité comprise entre 0,5 et 7 parties en poids pour 100 parties en poids de matériau polymère, dans le cas des MWCNTs ayant un rapport d'aspect supérieur à 1000 ; et
- une partie structurelle, de support ou mécanique revêtue d'une couche de ladite matrice contenant des MWCNTs ;

ledit produit obtenu en soumettant ladite matrice à un processus de réticulation.

3 μm     EHT = 20.00 kV     Signal A = InLens     Mag = 12.22 K X
WD = 7.9 mm     Aperture Size = 30.00 μm

*Fig. 1*

1 μm     EHT = 20.00 kV     Signal A = InLens
WD = 10.1 mm     Mag = 12.03 K X

*Fig. 2*

Fig. 3

**Size distribution by intensity**

*Fig. 4a*

**0.1% CNTs**

*Fig. 4b*

**Size distribution by intensity**

*Fig. 5a*

**0.2% CNTs**

*Fig. 5b*

*Fig. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7479516 B2
- US 20120123020 A1
- US 20100143701 A1
- US 20080300357 A1
- US 20090035570 A1
- WO 2006026691 A2
- WO 2009101498 A2
- WO 2010007163 A1
- EP 2868370 A1